# FASCICULE DE BREVET EUROPEEN

(11) **EP 3 863 845 B1**
(45) Date de publication et mention de la délivrance du brevet: **30.11.2022**
(21) Numéro de dépôt: 19813614.5
(22) Date de dépôt: 10.10.2019
(51) Int. Cl.: B29D 30/06, B29C 33/40

(54) **ÉLÉMENT DE MOULE POUR MOULE DE PNEUMATIQUE, ET PROCÉDÉ DE FABRICATION ASSOCIÉ**
FORMELEMENT FÜR EINE REIFENFORM UND ZUGEHÖRIGES HERSTELLUNGSVERFAHREN
MOLD ELEMENT FOR A TIRE MOLD, AND ASSOCIATED MANUFACTURING METHOD

(30) Priorité: 12.10.2018 FR 1859473
(43) Date de publication de la demande: 18.08.2021
(73) Titulaire: COMPAGNIE GENERALE DES ETABLISSEMENTS MICHELIN, 63000 Clermont-Ferrand (FR)
(72) Inventeur: CALVEL, Romain, 63040 Clermont-Ferrand Cedex 09 (FR); ANDANSON, Patrick, 63040 Clermont-Ferrand Cedex 09 (FR); DESBOIS, Marc, 63040 Clermont-Ferrand Cedex 09 (FR); SANDEYRON, Jérémy, 63040 Clermont-Ferrand Cedex 09 (FR)
(74) Mandataire: Noel, Luminita
(86) Numéro de dépôt international: PCT/FR2019/052410
(87) Numéro de publication internationale: WO 2020/074835

(56) Documents cités:
- EP-A1- 2 379 315
- WO-A1-2010/002390
- WO-A1-2012/156439

## Description

La présente invention concerne le domaine général des moules de cuisson ou vulcanisation pour pneumatiques de véhicules.

Plus particulièrement, la présente invention concerne un élément de moule destiné à être utilisé dans ce type de moule.

Classiquement, un moule de cuisson comprend deux coquilles latérales assurant chacune le moulage d'un des flancs latéraux du pneumatique, et une pluralité de secteurs assurant le moulage de la bande de roulement dudit pneumatique. Les coquilles et les secteurs définissent un espace intérieur destiné à être mis en contact avec l'ébauche du pneumatique non vulcanisée.

Pour former des découpures ou sculptures dans la bande de roulement du pneumatique, les secteurs du moule comprennent notamment des éléments de garniture s'étendant en saillie dans l'espace intérieur de moulage. Ces éléments de garniture forment un négatif des sculptures à mouler sur le pneumatique.

Par « élément de garniture », on entend une partie du moule qui comporte une surface de moulage permettant de mouler au moins une partie de la surface de roulement de la bande de roulement du pneumatique.

Classiquement, ces éléments de garniture sont rapportés sur un bloc support du secteur associé du moule qui est réalisé en acier. Il est par exemple connu du brevet EP-B1-2 379 315 de fabriquer un élément de garniture pourvu d'une peau et d'une pluralité de protubérances en saillie qui sont réalisées d'une seul tenant avec cette peau par frittage laser de couches de poudre métallique et qui sont destinées à mouler les sculptures de la bande de roulement. L'élément de garniture est ainsi rapporté en une seule opération sur le bloc support du secteur associé du moule.

Un tel élément de garniture présente une excellente résistance mécanique et permet de réaliser des milliers de cuissons de pneumatiques.

Cependant, ce type d'élément de garniture n'est pas adapté pour la cuisson de pneumatiques en petite série dans la mesure où son coût de fabrication est relativement élevé.

On comprend donc qu'il existe un besoin de proposer une solution permettant de mouler des séries limitées de pneumatiques de façon simple et économique.

La présente invention concerne un élément de moule pour moule de pneumatique du type comprenant une bande de roulement et deux flancs latéraux.

L'élément de moule comprend un corps en matière plastique, ou en matière synthétique, et pourvu d'une face de moulage.

L'élément de moule comprend également un revêtement déposé sur le corps et recouvrant au moins la face de moulage dudit corps et délimitant une surface de moulage destinée à mouler toute ou partie de la bande de roulement et/ou de l'un ou des deux flancs latéraux du pneumatique.

Par « pneumatique », on entend tous les types de bandages élastiques soumis ou non à une pression interne.

On entend par « bande de roulement » d'un pneumatique, une quantité de matériau caoutchoutique délimitée par deux surfaces latérales et par deux surfaces principales dont l'une, appelée surface de roulement, est destinée à entrer en contact avec une chaussée lorsque le pneumatique roule. La bande de roulement comprend une pluralité de découpures se prolongeant sur au moins une des surfaces latérales.

Par « flanc » d'un pneumatique, on entend une partie de la surface latérale du pneumatique disposée entre la bande de roulement et un bourrelet de ce pneumatique, débutant à partir des extrémités des découpures de la bande de roulement et se prolongeant jusqu'au bourrelet.

Par « face de moulage » du corps, on entend la face du corps destinée à être orientée du côté de l'espace intérieur de moulage du moule et présentant une forme correspondant à la courbure de la partie de la bande de roulement, ou du flanc latéral ou des flancs latéraux, à mouler.

On entend par « surface de moulage » délimitée par le revêtement, la surface de ce revêtement délimitant en partie l'espace intérieur de moulage du moule et contre laquelle vient en contact le pneumatique lors du moulage.

Un tel élément de moule composite présente l'avantage de pouvoir être fabriqué à moindre coût. En effet, on peut utiliser pour le corps un matériau à faible coût de revient.

Les caractéristiques de résistance mécanique, de conductivité thermique et/ou de dureté sont apportées par le revêtement.

Cet élément de moule est particulièrement adapté pour fabriquer des moules à bas coût et ayant une durée de vie limitée afin de cuire seulement quelques pneumatiques, par exemple moins de cent.

Ceci peut par exemple être les cas pour la fabrication de pneumatiques réalisés sans besoin de performance mais uniquement pour des essais de faisabilité ou de conception, ou encore pour des présentations lors de salons.

Le revêtement peut être obtenu par métallisation. Cette métallisation du corps en matière plastique ou synthétique permet d'obtenir des caractéristiques de résistance mécanique et de conductivité thermique suffisantes pour réaliser quelques cuissons de pneumatiques dans le moule associé, qui peut ensuite être jeté comme un consommable.

Dans un mode de réalisation, le corps est réalisé par fabrication additive. On entend par « corps réalisé par fabrication additive », tout procédé de fabrication basé sur la construction du corps couche par couche par addition de matière. De préférence, le corps de l'élément de moule est réalisé par stéréolithographie.

Alternativement, le corps de l'élément de moule peut être réalisé par d'autres techniques de fabrication additive, par exemple par frittage laser ou fusion d'une poudre en matière plastique ou synthétique, ou par dépôt de fil.

La matière plastique ou synthétique du corps peut ou non être chargée pour renforcer ses caractéristiques propres de résistance mécanique, de conductivité thermique et/ou de dureté. Lorsqu'un liant est utilisé en plus des charges, il est possible de prévoir une étape de déliantage à l'intérieur d'un four avant l'étape de métallisation du corps.

Dans un mode de réalisation alternatif, le corps de l'élément de moule peut être réalisé par moulage par injection, ou par thermoformage ou par rotomoulage ou encore par extrusion. A titre indicatif, il est possible d'utiliser des matières plastiques du type PA, PP, ABS, PC, POM, etc.

Ces techniques de fabrication sont particulièrement adaptées à la réalisation d'éléments de petites dimensions et de formes complexes et/ou creuses à faible coût.

A titre indicatif, l'épaisseur du corps peut être comprise entre 0,4 mm et 6 mm, et notamment comprise entre 0,4 mm et 0,6 mm. Avec une telle épaisseur, on limite l'isolation thermique du fait de la réalisation du corps en matière plastique ou synthétique. On précise ici que cette épaisseur du corps est mesurée à un emplacement ne présentant pas de protubérance. En effet, l'épaisseur du corps au niveau d'une protubérance peut atteindre des valeurs plus importantes, par exemple comprise entre 8 mm et 25mm.

A titre indicatif également, le revêtement peut présenter une épaisseur comprise entre 50 µm et 300 µm. De préférence, le revêtement est métallique.

Selon une conception particulière, le revêtement est constitué d'une pluralité de couches. Dans ce cas, il est possible de prévoir un revêtement comprenant une couche interne constituée de cuivre ou d'un alliage de cuivre, et une couche externe constituée de chrome ou d'un alliage de chrome. Dans un autre mode de réalisation, il est possible de prévoir au moins une couche intermédiaire constituée de nickel ou d'un alliage de nickel. Alternativement, il est aussi possible de prévoir une couche externe constituée de nickel ou d'un alliage de nickel.

Par « couche externe » du revêtement, on entend la couche la plus éloignée du corps formant substrat. Par « couche interne » du revêtement, on entend la couche qui recouvre directement le corps. Par « couche intermédiaire», on entend une couche située entre les couches interne et externe.

Le cuivre présente l'avantage de présenter de bonnes propriétés de conductivité thermique, le chrome de bonnes propriétés de résistance à l'usure et le nickel de bonnes propriétés mécaniques. En variante, il est possible de prévoir des couches de matériaux différents constituant le revêtement. Par ailleurs, il est aussi possible de prévoir un revêtement monocouche.

Selon une conception particulière, le corps de l'élément de moule comprend une pluralité de protubérances s'étendant en saillie de la face de moulage, venues de matière avec ledit corps et destinées à mouler des découpures dans la bande de roulement du pneumatique. Dans ce cas, l'élément de moule est un élément de garniture. Par « découpures » dans la bande de roulement, on entend l'espace délimité par des parois de matière qui s'étendent à partir de la surface de roulement destinée à entrer en contact avec la chaussée, qui se font face et qui sont distantes l'une de l'autre d'une distance non nulle.

La réalisation du corps en matière plastique ou synthétique, notamment par fabrication additive, présente l'avantage de pouvoir prévoir des protubérances présentant des géométriques complexes.

Selon une autre conception, le corps de l'élément de moule peut comprendre des moyens de marquage aptes à mouler un motif sur la bande de roulement ou sur l'un ou les deux flancs du pneumatique.

Les moyens de marquage peuvent par exemple être aptes à mouler un motif ou texture de type « velours » faisant contraste avec le reste du pneumatique et comportant par exemple une pluralité de lamelles, de brins, de stries, et/ou de cavités, etc. Les moyens de marquage peuvent aussi être aptes à mouler des informations techniques, légales ou distinctives de la marque du pneumatique pouvant être lues directement par les consommateurs.

L'invention concerne encore un moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique, au moins l'un des secteurs et/ou au moins l'un des flancs latéraux comprenant au moins un élément de moule tel que défini précédemment.

Selon une conception particulière, le corps de l'élément de moule peut être fixé sur un bloc support du secteur associé, ou de la coquille associée. Un tel bloc support peut être réutilisé lorsque l'élément de moule est jeté après la cuisson du nombre de pneumatiques souhaité.

Selon une autre conception alternative, le corps de l'élément de moule peut former la totalité d'un des secteurs, et/ou d'une ou des coquilles, du moule.

L'invention concerne également un procédé de fabrication d'un élément de moule pour moule de pneumatique du type comprenant une bande de roulement et deux flancs latéraux, ledit élément de moule comprenant un corps en matière plastique ou synthétique et pourvu d'une face de moulage.

Le procédé comprend au moins une étape de dépose sur le corps d'un revêtement pour recouvrir au moins la face de moulage dudit corps. L'étape de dépose du revêtement est avantageusement réalisée par trempage dans au moins un bain électrolytique.

Dans un mode de mise en oeuvre particulier, le procédé comprend, avant l'étape de dépose du revêtement, une étape de traitement de surface du corps par sablage et/ou par ponçage. Une telle étape optionnelle vise à favoriser l'adhésion du revêtement sur le corps.

Le procédé peut également comprendre une étape de fabrication du corps, ladite étape de fabrication du corps et l'étape de dépose du revêtement étant réalisées successivement sur une même ligne de fabrication.

Alternativement, l'étape de dépose du revêtement peut être prévue sur un corps préfabriqué sur une ligne spécifiquement dédiée qui peut par exemple être sur un site de production séparé.

Dans un mode de mise en œuvre avantageux, le corps est fabriqué par fabrication additive, ou encore par moulage par injection, ou par thermoformage ou par rotomoulage ou encore par extrusion.

L'invention concerne aussi un procédé de fabrication d'un moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique.

Le procédé comprend les étapes suivantes :
- une étape de fabrication d'au moins un élément de moule selon le procédé de fabrication tel que défini précédemment, et
- une étape de fixation dudit élément de moule fabriqué sur un bloc support du secteur associé, ou sur un bloc support de la coquille associée.

La présente invention sera mieux comprise à la lecture de la description détaillée d'un mode de réalisation pris à titre d'exemple nullement limitatif et illustré par les dessins annexés sur lesquels :
- la figure 1 est une vue en perspective illustrant un élément de moule selon un exemple de réalisation de l'invention,
- la figure 2 est une section selon l'axe II-II de la figure 1,
- la figure 3 est une vue en perspective de l'élément de moule de la figure 1 rapporté sur un bloc support de moule, et
- la figure 4 est un organigramme d'un procédé de fabrication de l'élément de moule selon un exemple de mise en œuvre de l'invention.

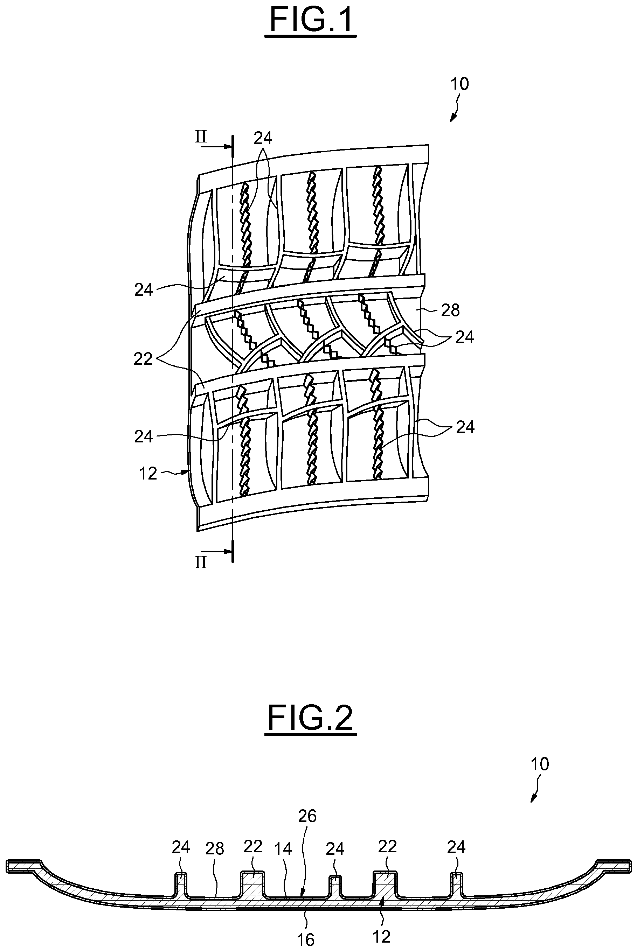

Sur la figure 1 est représenté un élément de moule 10 prévu pour être utilisé dans un moule de cuisson de pneumatiques de véhicules. Dans l'exemple de réalisation illustré, l'élément de moule 10 est conçu de sorte à former des sculptures dans la bande de roulement de ces pneumatiques. Dans ce cas, on parle alors d'élément de garniture.

Comme illustré aux figures 1, et 2, l'élément de moule 10 comprend un corps 12 qui est délimité par une première face 14 et par une seconde face 16 opposée à la première face. Les première et seconde faces 14, 16 délimitent l'épaisseur du corps 12.

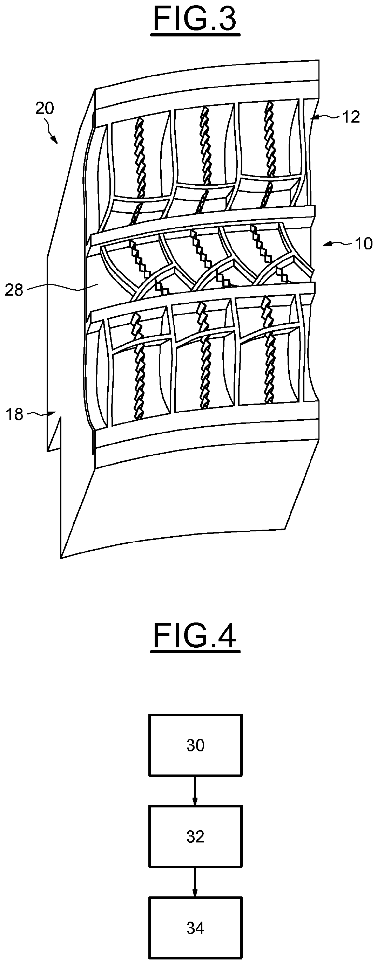

La première face 14 du corps forme une face de moulage en concordance de forme avec la courbure de la partie de la bande de roulement à mouler. La seconde face 16 est destinée à être en contact avec un bloc support 18 d'un secteur 20 (figure 3) du moule sur lequel est rapporté l'élément de moule 10. La seconde face 16 forme une face d'ancrage de l'élément de moule 10 sur le bloc support 18. Le bloc support 18 peut par exemple être réalisé en acier.

Le corps 12 de l'élément de moule comprend une pluralité de protubérances 22, 24 formant un réseau d'éléments de sculptures ou de découpures de pneumatique. Les protubérances 22, 24 s'étendent en saillie à partir de la face 14 de moulage. La protubérance 22 est prévue pour former un cordon destiné à mouler une partie d'une rainure circonférentielle dans la bande de roulement du pneumatique, tandis que les protubérances 24 constituent des lamelles destinées à mouler des incisions dans la bande de roulement du pneumatique. Chaque protubérance 24 s'étend à partir de la protubérance 22 ou d'une autre protubérance 24.

Par « rainure » d'un pneumatique, on entend une découpure générant des parois de matière opposées en vis-à-vis, l'espacement entre les parois de matière de la rainure étant tel que ces parois ne peuvent pas venir en contact l'une contre l'autre dans des conditions usuelles de roulage. Par « incision » d'un pneumatique, on entend une découpure générant des parois de matière opposées en vis-à-vis, l'espacement entre les parois de matière de l'incision étant approprié pour permettre la mise en contact au moins partielle de ces parois lors du passage dans l'empreinte de contact avec le sol.

Les protubérances 22, 24 sont venues de matière avec le corps 12, i.e. réalisées monoblocs avec ce dernier. L'épaisseur du corps 12 est par exemple comprise entre 0,4 mm et 6 mm, et notamment entre 0,4 mm et 0,6 mm.

Le corps 12 est réalisé en matière plastique ou synthétique. Avantageusement, le corps 12 est réalisé par fabrication additive. Cette technique présente l'avantage de pouvoir fabriquer à moindre coût le corps tout en obtenant des formes complexes, notamment pour les protubérances 24. Le corps 12 peut par exemple être réalisé par stéréolithographie. Alternativement, il est également possible de réaliser le corps 12 par moulage par injection d'une matière plastique. En variante, le corps 12 peut encore être obtenu par thermoformage ou par rotomoulage ou encore par extrusion.

L'élément de moule 10 comprend également un revêtement 26 qui recouvre le corps 12. A titre indicatif, le revêtement 26 présente une épaisseur comprise entre 50 µm et 300 µm. Dans l'exemple de réalisation illustré, le revêtement 26 recouvre entièrement le corps 12, notamment pour des raisons liées à la dépose de ce revêtement. En variante, il est possible de prévoir que le revêtement 26 recouvre uniquement la face 14 de moulage du corps, ou encore la face 14 de moulage du corps et une partie de la face 16 d'ancrage.

La partie du revêtement 26 qui recouvre la face 14 de moulage du corps délimite une surface de moulage 28 contre laquelle vient directement en contact le pneumatique à l'intérieur du moule. Cette surface de moulage 28 est délimitée par la surface externe du revêtement 26.

Le revêtement 26 peut comprendre une pluralité de couches superposées. Le revêtement 26 peut comprendre une couche interne recouvrant le corps 12 constituée de cuivre, une couche intermédiaire recouvrant la couche interne et constituée de nickel, et une couche externe recouvrant la couche intermédiaire et constituée de chrome. Alternativement, il est possible de prévoir pour le revêtement 26 un autre nombre de couches et/ou des couches de matériaux différents. On peut ainsi prévoir un revêtement comprenant une couche interne constituée de cuivre et une couche externe constituée de nickel, sans couche intermédiaire.

En référence à la figure 4, on va maintenant décrire les différentes étapes d'un procédé de fabrication permettant l'obtention de l'élément de moule 10.

Dans une première étape référencée 30, le corps est fabriqué par fabrication additive ou par moulage par injection, ou par thermoformage ou par rotomoulage ou par extrusion comme indiqué précédemment.

Si le corps est fabriqué par fabrication additive, il est de préférence réalisé par stéréolithographie, mais il peut aussi être réalisé par d'autres techniques de fabrication additive, telle que par frittage ou fusion laser d'une poudre synthétique, ou par dépôt de fil.

Ensuite, lors d'une deuxième étape 32, on réalise une opération de traitement de surface du corps nu par sablage et/ou par ponçage de sorte à favoriser l'obtention d'une bonne accroche du revêtement qui sera déposé à la troisième étape suivante 34. On précise ici que cette étape 32 n'est pas obligatoire dans tous les modes de réalisation de l'invention.

Lors de l'étape 34 de métallisation du corps, on revêt directement le corps nu du revêtement par trempage dans des bains électrolytiques pour obtenir le dépôt successif des différentes couches du revêtement. Le corps passe successivement dans les bains électrolytiques chacun étant de composition appropriée à la couche du revêtement à déposer.

A titre indicatif, le temps d'immersion à l'intérieur de chaque bain et le temps de séchage en sortie de ce bain peuvent par exemple être de l'ordre de quelques minutes. Après séchage, l'élément de moule composite ainsi obtenu peut être fixé sur le bloc support du secteur de moule.

Dans le procédé de fabrication qui vient d'être décrit, les étapes de fabrication du corps, de traitement de surface de ce corps fabriqué, et de dépose du revêtement sont réalisées d'une façon continue sur une même ligne de fabrication.

Dans un autre mode de mise en œuvre, le procédé de fabrication peut par exemple débuter à partir de l'étape de traitement de surface du corps lorsque celui-ci a été fabriqué préalablement sur un autre site de production dédié.

L'invention a été décrite sur la base d'un élément de moule comprenant des protubérances de conception particulière pour former des sculptures dans la bande de roulement du pneumatique. En variante, il est possible de prévoir d'autres formes pour ces protubérances.

Par ailleurs, comme indiqué précédemment, il est également possible sans sortir du cadre de l'invention de prévoir ce type d'élément de moule composite pour le moulage d'une partie d'un des flancs, ou des deux flancs, du pneumatique.

Grâce à l'invention, on dispose d'un élément de moule composite pour moule de pneumatique comprenant un corps formant âme qui est réalisé en matière plastique ou synthétique notamment de sorte à pouvoir être obtenu à moindre coût et prévoir des formes complexes, et qui est enrobé au moins en partie par un revêtement constituant la surface de moulage de cet élément.

## Revendications

1. Elément de moule pour moule de pneumatique du type comprenant une bande de roulement et deux flancs latéraux, **caractérisé en ce que** ledit élément de moule comprend un corps (12) en matière plastique ou synthétique et pourvu d'une face de moulage (14), et un revêtement (26) déposé sur le corps (12) et recouvrant au moins la face de moulage (14) dudit corps et délimitant une surface de moulage (28) destinée à mouler toute ou partie de la bande de roulement et/ou de l'un ou des deux flancs latéraux du pneumatique.

2. Elément de moule selon la revendication 1, dans lequel le corps (12) est réalisé par fabrication additive.

3. Elément de moule selon la revendication 1, dans lequel le corps (12) est réalisé par moulage par injection, ou par thermoformage ou par rotomoulage ou par extrusion.

4. Elément de moule selon l'une quelconque des revendications précédentes, dans lequel l'épaisseur du corps (12) est comprise entre 0,4 mm et 6 mm, et notamment entre 0,4 mm et 0,6 mm.

5. Elément de moule selon l'une quelconque des revendications précédentes, dans lequel le revêtement (26) présente une épaisseur comprise entre 50 µm et 300 µm.

6. Elément de moule selon l'une quelconque des revendications précédentes, dans lequel le revêtement (26) est métallique.

7. Elément de moule selon l'une quelconque des revendications précédentes, dans lequel le revêtement (26) est constitué d'une pluralité de couches.

8. Elément de moule selon la revendication 7, dans lequel le revêtement (26) comprend une couche interne constituée de cuivre ou d'un alliage de cuivre, et une couche externe constituée de chrome ou d'un alliage de chrome ou de nickel ou d'un alliage de nickel.

9. Elément de moule selon l'une quelconque des revendications précédentes, dans lequel le corps (12) comprend une pluralité de protubérances (22, 24) s'étendant en saillie de la face de moulage (14), venues de matière avec ledit corps et destinées à mouler des découpures dans la bande de roulement du pneumatique.

10. Moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique, au moins l'un des secteurs et/ou au moins l'un des flancs latéraux comprenant au moins un élément de moule selon l'une quelconque des revendications précédentes.

11. Procédé de fabrication d'un élément de moule pour moule de pneumatique du type comprenant une bande de roulement et deux flancs latéraux, ledit élément de moule comprenant un corps en matière plastique ou synthétique et pourvu d'une face de moulage, **caractérisé en ce qu'**il comprend au moins une étape de dépose sur le corps d'un revêtement pour recouvrir au moins la face de moulage dudit corps.

12. Procédé selon la revendication 11, dans lequel l'étape de dépose du revêtement est réalisée par trempage dans au moins un bain électrolytique.

13. Procédé selon la revendication 11 ou 12, comprenant une étape de fabrication du corps, ladite étape de fabrication du corps et l'étape de dépose du revêtement étant réalisées successivement sur une même ligne de fabrication.

14. Procédé selon la revendication 13, dans lequel le corps est fabriqué par fabrication additive ou par moulage par injection, ou par thermoformage ou par rotomoulage ou par extrusion.

15. Procédé de fabrication d'un moule pour pneumatique du type comprenant une bande de roulement et deux flancs latéraux, le moule comprenant des première et deuxième coquilles pour le moulage des flancs latéraux du pneumatique, et une pluralité de secteurs répartis dans le sens circonférentiel pour le moulage de la bande de roulement dudit pneumatique, le procédé comprenant les étapes suivantes :
- une étape de fabrication d'au moins un élément de moule selon le procédé de fabrication selon l'une quelconque des revendications 11 à 14, et
- une étape de fixation dudit élément de moule fabriqué sur un bloc support du secteur associé, ou de la coquille associée.

## Patentansprüche

1. Formelement für eine Reifenform für einen Reifen des Typs, welcher einen Laufstreifen und zwei Seitenwände umfasst, **dadurch gekennzeichnet, dass** das Formelement einen Körper (12) aus Kunststoff- oder Synthetikmaterial, der mit einer Formseite (14) versehen ist, und eine Beschichtung (26), die auf den Körper (12) aufgebracht ist und wenigstens die Formseite (14) des Körpers bedeckt und eine Formfläche (28) begrenzt, die dazu bestimmt ist, den Laufstreifen und/oder eine der Seitenwände des Reifens oder beide ganz oder teilweise zu formen, umfasst.

2. Formelement nach Anspruch 1, wobei der Körper (12) durch additive Fertigung hergestellt ist.

3. Formelement nach Anspruch 1, wobei der Körper (12) durch Spritzgießen oder durch Thermoformen oder durch Rotationsformen oder durch Extrusion hergestellt ist.

4. Formelement nach einem der vorhergehenden Ansprüche, wobei die Dicke des Körpers (12) zwischen 0,4 mm und 6 mm und insbesondere zwischen 0,4 mm und 0,6 mm beträgt.

5. Formelement nach einem der vorhergehenden Ansprüche, wobei die Beschichtung (26) eine Dicke zwischen 50 µm und 300 µm aufweist.

6. Formelement nach einem der vorhergehenden Ansprüche, wobei die Beschichtung (26) metallisch ist.

7. Formelement nach einem der vorhergehenden Ansprüche, wobei die Beschichtung (26) aus mehreren Schichten besteht.

8. Formelement nach Anspruch 7, wobei die Beschichtung (26) eine innere Schicht, die aus Kupfer oder aus einer Kupferlegierung besteht, und eine äußere Schicht, die aus Chrom oder aus einer Chromlegierung oder aus Nickel oder aus einer Nickellegierung besteht, umfasst.

9. Formelement nach einem der vorhergehenden Ansprüche, wobei der Körper (12) mehrere Vorsprünge (22, 24) umfasst, die sich von der Formseite (14) aus vorstehend erstrecken, stoffschlüssig mit dem Körper verbunden sind und dazu bestimmt sind, Ausschnitte im Laufstreifen des Reifens zu formen.

10. Form für einen Reifen des Typs, welcher einen Laufstreifen und zwei Seitenwände umfasst, wobei die Form eine erste und eine zweite Seitenschale zum Formen der Seitenwände des Reifens und mehrere in der Umfangsrichtung verteilte Segmente zum Formen des Laufstreifens des Reifens umfasst, wobei wenigstens eines der Segmente und/oder wenigstens eine der Seitenschalen wenigstens ein Formelement nach einem der vorhergehenden Ansprüche umfassen.

11. Verfahren zur Herstellung eines Formelements für eine Reifenform für einen Reifen des Typs, welcher einen Laufstreifen und zwei Seitenwände umfasst, wobei das Formelement einen Körper aus Kunststoff- oder Synthetikmaterial, der mit einer Formseite versehen ist, umfasst, **dadurch gekennzeichnet, dass** es wenigstens einen Schritt der Aufbringung einer Beschichtung auf den Körper, um wenigstens die Formseite des Körpers zu bedecken, umfasst.

12. Verfahren nach Anspruch 11, wobei der Schritt der Aufbringung der Beschichtung durch Eintauchen in wenigstens ein elektrolytisches Bad durchgeführt wird.

13. Verfahren nach Anspruch 11 oder 12, welches einen Schritt der Herstellung des Körpers umfasst, wobei der Schritt der Herstellung des Körpers und der Schritt der Aufbringung der Beschichtung nacheinander auf derselben Fertigungslinie durchgeführt werden.

14. Verfahren nach Anspruch 13, wobei der Körper durch additive Fertigung oder durch Spritzgießen oder durch Thermoformen oder durch Rotationsformen oder durch Extrusion hergestellt wird.

15. Verfahren zur Herstellung einer Form für einen Reifen des Typs, welcher einen Laufstreifen und zwei Seitenwände umfasst, wobei die Form eine erste und eine zweite Seitenschale zum Formen der Seitenwände des Reifens und mehrere in der Umfangsrichtung verteilte Segmente zum Formen des Laufstreifens des Reifens umfasst, wobei das Verfahren die folgenden Schritte umfasst:
- einen Schritt der Herstellung wenigstens eines Formelements nach dem Verfahren zur Herstellung nach einem der Ansprüche 11 bis 14, und
- einen Schritt der Befestigung dieses hergestellten Formelements an einem Halteblock des zugehörigen Segments oder der zugehörigen Seitenschale.

## Claims

1. Mould element for moulding a tyre of the type comprising a tread and two sidewalls, **characterized in that** said mould element comprises a body (12) made of plastic or synthetic material and provided with a moulding face (14) and a coating (26) applied to the body (12) and covering at least the moulding face (14) of said body and delimiting a moulding surface (28) intended to mould all or part of the tread and/or of one or both sidewalls of the tyre.

2. Mould element according to Claim 1, wherein the body (12) is produced using additive manufacturing.

3. Mould element according to Claim 1, wherein the body (12) is produced using injection moulding or thermoforming or rotary moulding or extrusion.

4. Mould element according to any one of the preceding claims, wherein the thickness of the body (12) is comprised between 0.4 mm and 6 mm, and notably between 0.4 mm and
0.6 mm.

5. Mould element according to any one of the preceding claims, wherein the coating (26) has a thickness of between 50 µm and 300 µm.

6. Mould element according to any one of the preceding claims, wherein the coating (26) is metallic.

7. Mould element according to any one of the preceding claims, wherein the coating (26) is made up of a plurality of layers.

8. Mould element according to Claim 7, wherein the coating (26) comprises an internal layer made of copper or of a copper alloy, and an external layer made of chrome or of a chrome alloy, or of nickel or of a nickel alloy.

9. Mould element according to any one of the preceding claims, wherein the body (12) comprises a plurality of protuberances (22, 24) projecting out from the moulding face (14), formed as one piece with said body and intended to mould cuts in the tread of the tyre.

10. Mould for a tyre of the type comprising a tread and two sidewalls, the mould comprising first and second shells for moulding the sidewalls of the tyre, and a plurality of segments distributed in the circumferential direction, for moulding the tread of said tyre, at least one of the segments and/or at least one of the sidewalls comprising at least one mould element according to any one of the preceding claims.

11. Method for manufacturing a mould element for a mould for a tyre of the type comprising a tread and two sidewalls, said mould element comprising a body made of plastic or synthetic material and provided with a moulding face, **characterized in that** it comprises at least one step of applying to the body a coating to cover at least the moulding face of said body.

12. Method according to Claim 11, wherein the step of applying the coating is performed by dipping in at least one electrolyte bath.

13. Method according to Claim 11 or 12, comprising a step of manufacturing the body, said step of manufacturing the body and the step of applying the coating being performed successively on the one same manufacturing line.

14. Method according to Claim 13, wherein the body is produced using additive manufacturing or injection moulding or thermoforming or rotary moulding or extrusion.

15. Method for manufacturing a mould for a tyre of the type comprising a tread and two sidewalls, the mould comprising first and second shells for moulding the sidewalls of the tyre, and a plurality of segments distributed in the circumferential direction, for moulding the tread of said tyre, the method comprising the following steps:
- a step of manufacturing at least one mould element according to the method of manufacture according to any one of Claims 11 to 14, and
- a step of attaching said manufactured mould element to a support block for the associated segment or the associated shell.
